# EUROPEAN PATENT SPECIFICATION

(11) **EP 2 255 507 B1**
(45) Date of publication and mention of the grant of the patent: **06.07.2016**
(21) Application number: 09722939.7
(22) Date of filing: 23.02.2009
(51) Int. Cl.: H04L 29/06

(54) **A SYSTEM AND METHOD FOR SECURELY ISSUING SUBSCRIPTION CREDENTIALS TO COMMUNICATION DEVICES**
SYSTEM UND VERFAHREN ZUR SICHEREN AUSSTELLUNG VON ABONNEMENTBERECHTIGUNGEN AN KOMMUNIKATIONSGERÄTE
SYSTÈME ET PROCÉDÉ DESTINÉS À RÉALISER UN ENVOI SÉCURISÉ DE JUSTIFICATIFS D'IDENTITÉ D'ABONNEMENT À DES DISPOSITIFS DE COMMUNICATION

(30) Priority: 20.03.2008 US 52028
(43) Date of publication of application: 01.12.2010
(73) Proprietor: Telefonaktiebolaget LM Ericsson (publ), 164 83 Stockholm (SE)
(72) Inventor: SMEETS, Bernard, S-247 51 Dalby (SE)
(74) Representative: Ericsson
(86) International application number: PCT/EP2009/052104
(87) International publication number: WO 2009/115394

(56) References cited:
- WO-A2-02/058361
- MICHAEL KASPER; NICOLAI KUNTZE; ANDREAS U SCHMIDT ED - SUNGOK LEE; THOMAS BYEONGNAM YOON: "Subscriber Authentication in Cellular Networks with Trusted Virtual SIMs" ADVANCED COMMUNICATION TECHNOLOGY, 2008. ICACT 2008. 10TH INTERNATIONAL CONFERENCE ON, IEEE, PISCATAWAY, NJ, USA, 17 February 2008 (2008-02-17), pages 903-908, XP031245274 ISBN: 9788955191363

## Description

### BACKGROUND

### Technical Field

The present invention generally relates to authorizing communication devices for usage in a communication network, and particularly relates to securely issuing subscription credentials to communication devices, where such credentials authorize the communication devices within one or more communication networks.

### Background

Communication devices, such as cellular telephones, PDAs, wireless modules, etc., are unique as compared to many other types of consumer electronics in that their usage almost always depends on their end users entering into usage subscription agreements. Such agreements may be straightforward default cost/term agreements, such a prepaid and pay-as-you go agreements, while other agreements establish minimum service agreement time periods and may involve a complex package of services and features.

According to the subscription model, a given communication device must be authorized before it can be used (at least for non-emergency services), and, in almost all cases, the mechanisms for providing and maintaining that authorization must be secure to prevent misuse or outright fraud. The Global Services for Mobile communications (GSM) standards have long addressed these concerns through the use of Subscriber Identity Modules (SIMs). According to the SIM-based model, a given SIM securely holds authorization information that allows a given device to be used with one or more communication networks. In some cases, a SIM can be transferred between devices, allowing the same SIM to activate different devices one at a time.

The SIM model has broadened over time, and SIMs can be implemented in software, as well as in hardware. However, device manufacturers and network operators still face the same basic challenge of simplifying the process of buying or otherwise distributing communication devices for network activation by the end users of those devices. In some respects, that process is well developed. For example, a device manufacturer can pre-configure communication devices with permanent subscription credentials and/or network operators can physically distribute hardware-based SIMs that contain valid subscription credentials.

Another potentially more flexible approach is known, wherein so-called Over-the-Air (OTA) provisioning is used. In a typical OTA model, a given communication device is provisioned with temporary subscription credentials, where those temporary credentials allow limited access to the communication networks of one or more network operators for the express purpose of obtaining permanent subscription credentials. While in some sense the use of temporary subscription credentials is more convenient than pre-configuring devices with permanent credentials, use of temporary subscription credentials still requires significant care and coordination between device manufacturers and network operators, to ensure credentialing security. In addition the network operator will face an immediate cost of organizing temporary credentials whereas revenues come only after the permanent credentials have been provisioned.

Kasper M et al in "Subscriber Authentication in Cellular Networks with Trusted Virtual SIMs", 17 February 2008, International Conference on Advanced Communication Technology, 2008, icact 2008, discloses the possibility of obtaining subscription credentials by using the concepts of vSIM (virtual SIM) and Mobile Trusted Platform (MTP).

### SUMMARY

According to teachings presented herein, communication devices, such as newly manufactured mobile telephones or other mobile devices, are conveniently provisioned with network subscription credentials after purchase, without device manufacturer or network operators having to preload temporary subscription credentials or to otherwise make provisions for supporting direct over-the-air provisioning of the devices. Broadly, a user communicatively couples a communication device to be provisioned to an intermediate data device that has existing communication capabilities, e.g., a PC or already-provisioned mobile telephone. A subscription server or other entity then uses a communication link with the intermediate data device to provide subscription credentials to the communication device, subject to trusted-device and owner identity verifications.

In at least one embodiment, a subscription credentialing system comprises a subscription server configured to receive a credential request from an intermediate data device operating under the control of a requesting user and having a first communication link with a remote communication device and a second communication link with the subscription server. The subscription server is further configured to prompt an external identity verification system to communicate with the intermediate data device to verify a device owner identity to be linked with the subscription credentials and, responsive to device owner identity verification, establish communication with the remote communication device through the intermediate data device.

With such communications established, the subscription server requests a device certificate from the remote communication device. Further, the subscription server is configured to prompt an external validation system to verify a validity of the device certificate and, responsive to validation of the device certificate, send a first transaction identifier and operator certificate to the remote communication device and correspondingly receive a signed return value from the remote communication device. Further, the subscription server is configured to authenticate and decrypt the signed return value to recover a second transaction identifier and correspondingly generate a credentialing session key from the first and second transaction identifier, and conduct an encrypted credentialing session with the remote communication device based on the session key, including the transfer of the subscription credentials.

In at least one embodiment, the subscription server comprises an internet-based server that is configured for internet-based communications with one or more of the intermediate data device, the external identity verification system, and the external validation system. For example, the subscription server comprises an internet web server that is configured to provide a web browser-based interface to the intermediate data device.

Further, in at least one embodiment, the subscription server is configured to cancel active subscription credentials for a credentialed remote communication device. For example, the subscription server performs credential cancellation processing including receiving a deactivation request from the credentialed remote communication device, including a device identifier and a device certificate, prompting an external validation system to verify the validity of the device certificate, and, responsive to validation of the device certificate, sending a first transaction identifier and operator certificate to the credentialed remote communication device and correspondingly receiving a signed return value from the credentialed remote communication device. Such processing further includes authenticating and decrypting the signed return value to recover a subscription credential identifier and a second transaction identifier. Further, if the subscription credential identifier corresponds to a subscription, processing continues with generating an encrypted deactivation message based on the subscription credential identifier and the first and second transaction identifiers and sending the deactivation message to the credentialed remote communication device, and prompting a subscriber registration server to deactivate the active subscription credentials.

Of course, the above issuing of new subscription credentials (and cancellation of active subscription credentials) can be implemented in method form in a range of network-accessible nodes or systems. Broadly, the teachings herein provide processing in which network operators allow device users efficiently and securely to obtain subscription credentials for communication devices while avoiding the manufacturing and credentialing complexities and costs attending direct over-the-air provisioning of such devices. Therefore, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of a subscription credentialing server, shown in context with an operator network, such as a cellular telephone network.
Fig. 2 is a block diagram of one embodiment of processing logic that can be implemented at a subscription server for supporting a method of subscription credentialing.
Fig. 3 is a block diagram of one embodiment of processing logic that can be implemented at a subscription server for supporting a method of deactivating subscription credentials.
Fig. 4 is a block diagram of one embodiment of a device manufacturing system, which may be used to initialize communication devices for later subscription credentialing as taught herein.

### DETAILED DESCRIPTION

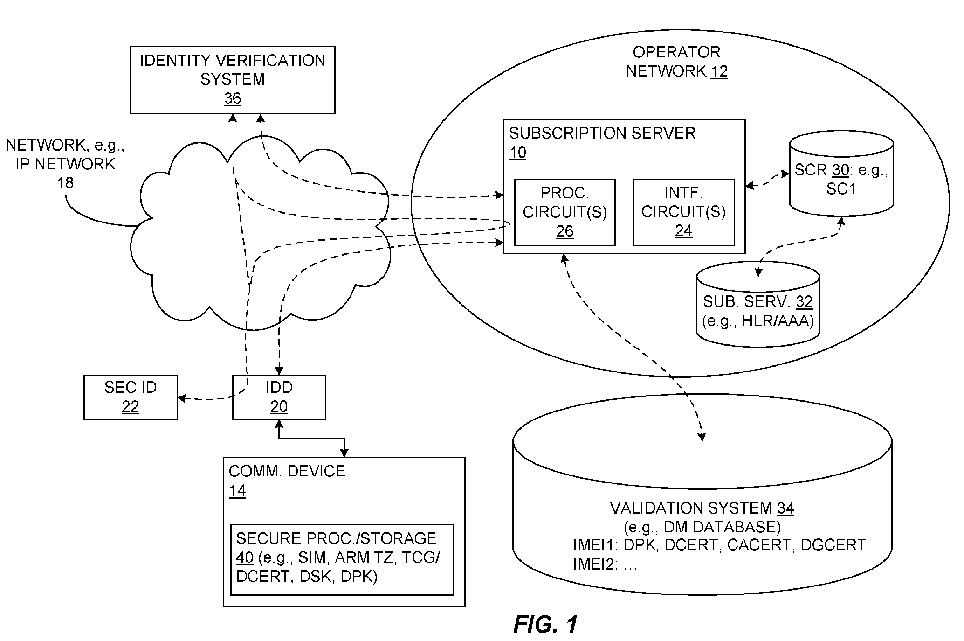

Fig. 1 illustrates one embodiment of a subscription server 10 that is included in or associated with an operator network 12, such as a wireless communication network providing cellular communication services, for example. The subscription server 10 is configured to provide subscription credentials to a communication device 14, which is remote from the subscription server 10 and is lacking subscription credentials for accessing the operator network 12 or, in many instances, any network. For example, to obtain desired reductions in manufacturing, distribution, and sales complexity, and to obtain gains in credentialing security, device manufacturers may choose to release devices without any subscription credentials.

To enable simple and efficient post-purchase credentialing of such devices, the subscription server 10 is configured to support subscription credentialing services to remote communication devices based on communicating with such devices through intermediate data devices, which may be a user's personal computer (PC), a user's already-provisioned communication device, or some other device that can communicate both with the communication device 14, e.g., through a Bluetooth, IrDA, USB, Ethernet, or other "local" connection, and can communicate with the subscription server 10, e.g., via the internet 18 or other communication network connection.

Thus, one sees an intermediate data device (IDD) 20 that includes or otherwise has access to a secure ID 22, which may be represented in terms of a user password or other access restriction based on user identify, but which preferably is a smartcard or other form of secure ID, such as a credit card/card reader, etc. Preferably, the IDD 20 includes a user interface or other features supporting identification processing, as well as supporting carrying out a subscription credentialing transaction with the subscription server 10. Correspondingly, the subscription server 10 includes one or more network communication interfaces 24, which support wired and/or wireless communications according to standard or proprietary protocols. Preferably, the communication interface(s) 24 include network interface circuits supporting internet-based communications with the subscription server 10, thereby allowing the IDD 20 to communicate with the subscription server 10 via the internet. Indeed, in at least one embodiment, the subscription server 10 comprises a web server that supports browser-based subscription credential processing, e.g., it provides a web page that supports browser-based subscription credential requests.

Further, the subscription server 10 includes one or more processing circuits or systems 26, which may comprise general- or special-purpose microprocessor-based circuits that are configured or otherwise provisioned according to computer programs stored on a computer-readable medium within or associated with the subscription server 10 - e.g., solid state or magnetic memory devices. The processing circuits 26 may be configured to use the communication interface circuits 24 for communicating with the IDD 20, and may use the same or other interfaces for communicating with a subscription credentials database 30, a subscriber registration server 32, which may be included within the operator network 12. Further, whether through the same or other communication interfaces, the subscription server 10 is configured to communicate with an external validation system 34, which may include a device certificate database and may be maintained by one or more device manufacturers, and with an external identity verification system 36, which may be maintained by a third-party identification service.

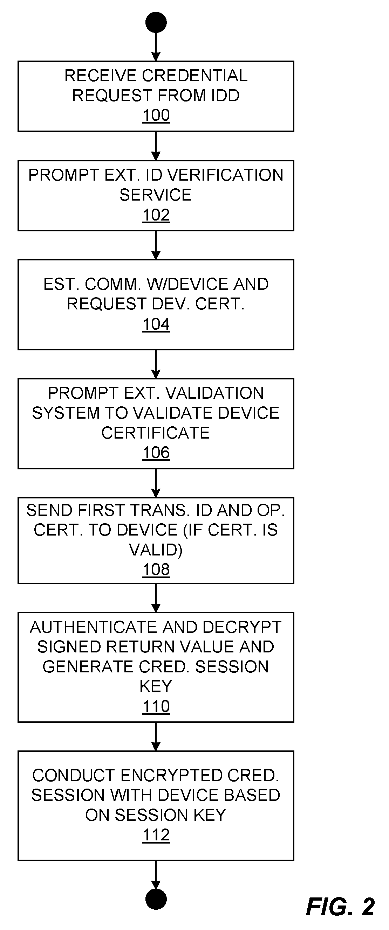

Using the illustrated processing context of Fig. 1, Fig. 2 illustrates processing for implementing an embodiment of a method of providing subscription credentials to remote communication devices lacking subscription credentials for network access. Such processing may be implemented in hardware, software, or any combination thereof. For example, such processing may be carried out in the subscription server 10, based on provisioning it with computer program instructions whose execution by the processing circuits 26 implements the method. Also, unless noted, the sequential processing steps are for illustration and at least some steps may be performed in a different order, or in parallel.

With such qualifications in mind, the illustrated embodiment of processing "begins" with the subscription server 10 receiving a credential request from the IDD 20 (Block 100). (The IDD 20 is assumed to be operating under the control of a requesting user and has a first communication link with the communication device 14 and a second communication link with the subscription server 10, and thus can function as an intermediary in the support of the subscription credentialing process.) Note that the connection between the IDD 20 and the subscription server 10 preferably is a secure connection using, e.g., SSL or TLS, IPSec, or other security protocol. However, while a secure link is preferred, it is not required in at least one embodiment.

Processing continues with the subscription server 10 prompting the external identity verification system 36 to communicate with the IDD 20 to verify a device owner identity to be linked with the (requested) subscription credentials (Block 102). In this regard, one embodiment of the subscription server 10 relies on the external identify verification system 36 to establish its own communication link with/to the IDD 20, and thus may provide the external identity verification system 36 with a network address (e.g., IP address) or other information enabling the system 36 to contact the IDD 20. (Or the subscription server 10 may provide such information to the IDD 20, enabling the IDD 20 to contact the external identity verification system 36.) In other embodiments, the IDD 20 and the external identity verification system 36 communicate using the subscription server 10 as an intermediary. Preferably, the user interface of the IDD 20 facilitates user interaction for conducting the identity verification procedure.

Regardless, use of the external identity verification system 36 enables the subscription server 10 to insure that the requested subscription credentials are linked to a verified device owner identity that can be used for contract fulfillment, billing, etc. As a non-limiting example, the ID 22 comprises a "BankID" client module (software) that is tied to a known, verified device owner identification and, possibly, corresponding financial account information. (See, e.g., www.bankid.com for information made available by Finansiell ID-Teknik BID AB.)

Processing continues responsive to device owner identity verification, i.e., if verification fails, the subscription server 10 aborts the credentialing process. However, assuming successful device owner identity verification, processing continues with the subscription server 10 establishing communication with the communication device 14 through the IDD 20. In one embodiment, the IDD 20 is configured to allow such communications by "passing through" commands and data between the subscription server 10 and the communication device 14. In another embodiment, the IDD 20 is configured to act as a client to the communication device 14 and to the subscription server 10, and to act as an intermediary for command/data translation between them. In either case, those skilled in the art will appreciate that, effectively or literally, the subscription server 10 communicates with the communication device 14 through the IDD 20, and that such communications may be enabled by, for example, configuring the IDD 20 with a downloadable applet or other software.

Upon establishing communications with the communication device 14 through the IDD 20, the subscription server's processing continues with requesting a device certificate from the communication device 14 (Block 104). Referring momentarily back to Fig. 1, one sees that the communication device 14 includes one or more secure processing and/or storage elements, one of which may be a Subscriber Identity Module (SIM). In one embodiment, the SIM is implemented in hardware, such as a Universal Integrated Circuit Card (UICC) or other hardware-based SIM device. However, in another embodiment, the SIM is implemented as software, which may be hosted in a secure processing environment. By way of non-limiting examples, the communication device 14 may implement a secure computing platform according to the ARM TRUSTZONE specifications or according to the TCG (Trusted Computing Group) specifications. Unless otherwise specified herein, the term "SIM" both in the description and in the appended claims of this application must be given broad construction and is intended to encompass hardware-based SIMs (e.g., UICCs) and software-based SIMs (e.g., Universal SIMs referred to as USIMs, or Virtual SIMs referred to as VSIMs), or any combination thereof.

In any case, as will be detailed later herein, a device manufacturer or other initializing party prepares the communication device 14 for sale or distribution to an end user by loading into the device a device certificate (DCERT), comprising a secure digital certificate. The communication device 14 further holds an encryption key pair DSK/DPK (representing a device secret key and a device public key, respectively). Thus, in response to the subscription server's device certificate request, the communication device 14 sends its DCERT to the subscription server 10. Those skilled in the art will appreciate that this action comprises sending the actual DCERT from the memory of the communication device 14, or, equivalently, sending a Uniform Resource Locator (URL) or other network ID that points to a location where the DCERT is held.

In response to receiving the DCERT, the subscription server 10 prompts the external validation system 34 to verify the validity of the DCERT (Block 106). For example, device manufacturers may maintain one or more databases of valid device certificates and may track which certificates are valid and which certificates are revoked. In one example, the validation system 34 maintains or otherwise has access to information keyed to device identifiers, such as International Mobile Equipment Identities (IMEIs). For example, it may store for IMEI1 a device public key DPK, a device certificate DCERT, a Certificate Authority certificate CACERT, and a device generation certificate DGCERT, where that latter certificate comprises a device family or model certificate used to derive DCERT. Like information may be maintained for IMEI2 and so on.

Further, such a database may indicate whether a given valid certificate has already been tagged as having subscription credentials activated for it. Thus, the external validation system 34 has access to, or includes, one or more certificate databases that indicate the validity and status of device certificates. Of course, the validation system 34 and/or the databases used by it may be maintained by one or more certificate authorities, such as VERISIGN.

Processing at the subscription server 10 continues in response to validation of the device certificate, i.e., the subscription server 10 aborts the credentialing process if the validation system 34 indicates a problem with the DCERT. Otherwise, assuming successful validation, the subscription server 10 sends a first transaction identifier and an operator certificate to the communication device 14, and correspondingly receives a signed return value from the communication device 14 (Block 108). For example, the subscription server 10 generates the first transaction identifier as a first random value. That value may be denoted as RRAND1 and the operator (digital) certificate may be denoted as OCERT.

Thus, the communication device 14 receives OCERT and RRAND1, and it is configured to check/validate OCERT. In one such embodiment, the secure processing/storage elements 40 of the communication device 14 may be loaded with the information needed to verify OCERT. For example, the communication device 14 may hold a CACERT, representing a Certifying Authority's (CA) digital certificate, or any other such information that allows the communication device 14 to recognize OCERT as a valid operator's certificate. (Note that the communication device 14 may be preconfigured for a particular network operator by providing it with the corresponding OCERT information, or it may be preconfigured with OCERT information for several network operators, thereby giving the device owner options regarding which network operator or operators are used.)

Assuming that the communication device 14 verifies OCERT, it generates a second transaction identifier, e.g., another random value RRAND2, and it sends a signed encrypted return value to the subscription server 10. In at least one embodiment, the communication device 14 generates the signed encrypted return value, denoted as RETVAL, by encrypting RRAND1 and RRAND2 using the operator's public key OPK, as obtained from OCERT (e.g., a two-field encrypted value denoted as OPK[RRAND1 | RRAND2] that is signed using the device's secret key DSK). Thus, from the perspective of the subscription server 10, processing continues with receiving the signed encrypted return value from the communication device 14, authenticating and decrypting that return value and (assuming successful authentication, generating a credentialing session key, denoted as KSES (Block 110).

In more detail then, the subscription server 10 receives RETVAL from the communication device 14. To authenticate RETVAL, the subscription server 10 checks the device's signature against the DCERT it earlier received from the communication device 14. Further, in one or more embodiments, the subscription server 10 verifies that RRAND1 as included in RETVAL matches the RRAND1 earlier sent to the communication device 14 by the subscription server 10. The subscription server 10 aborts the credentialing process if such authentication fails.

Thus, in at least one embodiment, authenticating and decrypting the signed return value RETVAL at the subscription server 10 comprises verifying a signature of the signed return value against the device certificate, decrypting the signed return value using an operator secret key associated with the operator certificate, and verifying that the signed return value includes a correct copy of the first transaction identifier. Further, in at least one such embodiment, generating the credentialing session key from the first and second identifiers comprises hashing a combination of the first and second transaction identifiers.

In a more detailed key generation example, again assuming successful authentication, the subscription server 10 generates the credentialing session key KSES in one embodiment using a cryptographic hashing function such as SHA1 or MD5. The hashing function may operate, for example, on RRAND1 and RRAND2. In one such embodiment, the subscription server 10 hashes a combination of RRAND1 and RRAND2. Of course, the communication device 14 is configured such that it is capable of the same or complementary cryptographic operations, so that it can generate/use KSES from RRAND1 and RRAND2, which are both known to the communication device 14 at this point in the credentialing process. In another embodiment, the subscription server 10 is configured to generate KSES based on a cryptographic hashing of RRAND1, RRAND2, and a unique equipment identifier for the communication device 14, such as an IMEI.

The subscription server 10 for example hashes a combination of RRAND1 and RRAND2 to generate KSES, and then conducts an encrypted credentialing session with the communication device 14 based on KSES (Block 112). For example, referring to Fig. 1, the subscription server may communicate with the subscription credentials database 30 (also known as a subscription credential repository or SCR) as shown in Fig. 1 to obtain subscription credentials, denoted as SC1, for the communication device 14. The SC1 credentials may include or be tied to a given IMEI, and the subscription server 10 thus encrypts SC1 using KSES and sends the SC1 credentials to the communication device 14. In conjunction with that credentialing session, the subscription server 10 registers the communication device 14 with the subscriber server 20, which may be a Home Location Register (HLR) and/or an Access/Authorization/Accounting (AAA) server.

Thus, according to the above processing, the subscription server 10 is configured to communicate with one or more subscriber registration servers to activate the communication device 14 for one or more communication networks associated with the subscription credentials, e.g., operator network 12. Further, whether done in conjunction with or at the successful conclusion of the credentialing session, the subscription server 10 is configured in one or more embodiments to communicate with the external validation system 34 and/or other databases to indicate activation of the communication device 14. For example, the subscription server 10 may send the validation system 34 an indication that subscription credentials have been transferred to the communication device 14 and correspondingly activated for the operator network 12. The validation system thus marks the DCERT data for that particular communication device 14, to indicate that the communication device 14 has active credentials. That information may be used to block or otherwise limit the ability to acquire new or modified subscription credentials, absent some authorized resetting procedure.

On that point, the subscription server 10 in one or more embodiments supports canceling active subscription credentials for a credentialed communication device. Such cancellation procedures preferably are protected against malicious impersonating agents trying to cancel credentials in the communication device 14 or subscription server 10 or validation system 34. For convenience, one may assume that the communication device 14 has been successfully credentialed and the device owner now wishes to cancel those credentials.

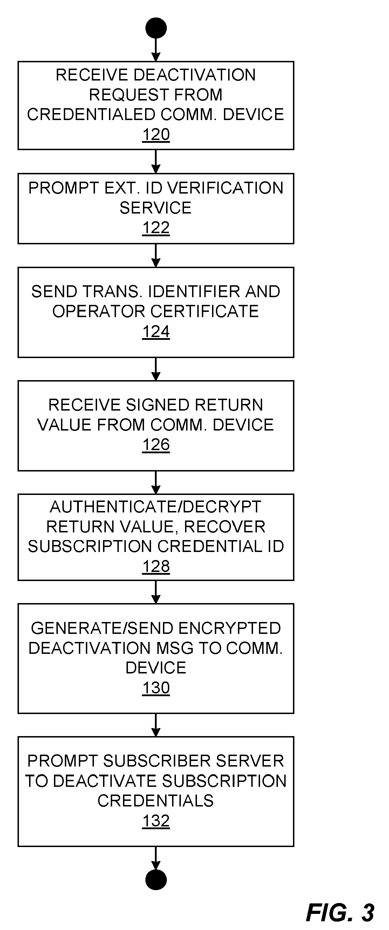

In an example of such processing, Fig. 3 illustrates that the subscription server 10 receives a deactivation request from the credentialed communication device 14 (Block 120). In this case, the communication device 14 has active subscription credentials, so the request may come through the operator network 12, based on wireless signaling directly between the communication device 14 and the operator network 12, which may comprise a cellular communications network based on Wideband CDMA (WCDMA) for example, or based on the LTE standards under development by the Third Generation Partnership Project (3GPP). Of course, the IDD 20 also may be used as an intermediary, such as was done for the initial credentialing.

The request includes a device identifier (e.g., the device's IMEI) and a device certificate (e.g., DCERT as described earlier). Processing thus continues in this embodiment with the subscription server 10 prompting the external validation system 34 to verify a validity of the device certificate (Block 122). This verification may be tailored to the deactivation process, such as by confirming that the device certificate currently is marked as valid for active, issued subscription credentials. Absent validation, the subscription server 10 aborts the deactivation process. However, responsive to validation of the device certificate, the subscription server 10 sends a first transaction identifier and operator certificate, e.g., OCERT, to the communication device 14 (Block 124). This first transaction identifier may be generated as a random number unique to this particular deactivation transaction, e.g., like the RRAND1 discussed in the context of Fig. 2.

The communication device 14 checks OCERT as described before, and as before sends a signed returned value RETVAL to the subscription server 10. Thus, processing at the subscription server 10 continues with receiving the signed return value from the communication device 14 (Block 126), and authenticating and decrypting the signed return value to recover a subscription credential identifier and a second transaction identifier (Block 128). If the subscription credential identifier corresponds to a valid subscription, processing continues with generating an encrypted deactivation message based on the subscription credential identifier and the first and second transaction identifiers, and sending the deactivation message to the credentialed remote communication device (Block 130). Processing continues with the subscription server 10 prompting the subscriber registration server 32 to deactivate the active subscription credentials (Block 132).

In understanding the above credential deactivation and earlier described credential activation, it may be helpful to illustrate and describe one embodiment of manufacturing-time device provisioning as contemplated herein. As a point of manufacturing and distribution simplicity, the teachings herein avoid the need to load newly manufactured devices with permanent or even temporary subscription credentials, because IDDs are used to provide the initial communication link with subscription servers, meaning that new or reset communication devices do not need "out of the box" subscription credentials supporting independent communications between the devices and supporting subscription servers.

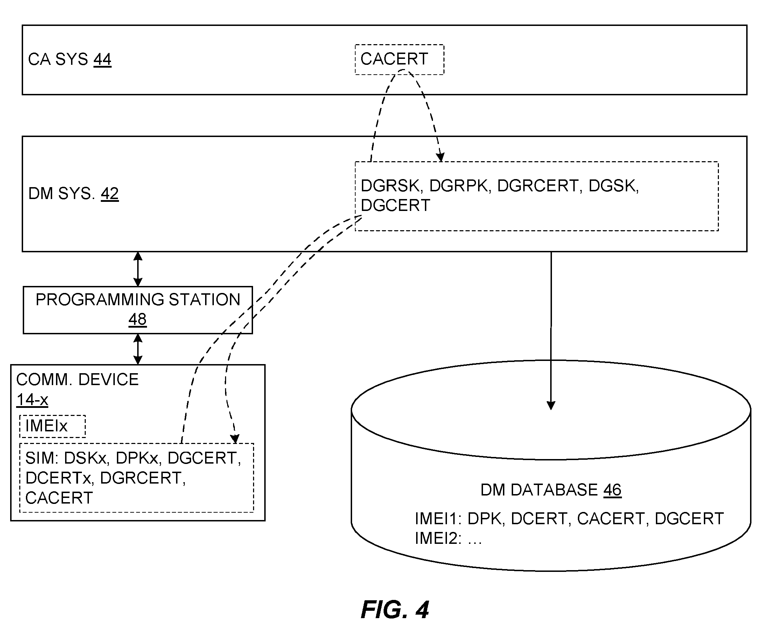

However, for secure credentialing via IDDs as proposed herein, communication devices must be "trusted." Thus, according to Fig. 4, device manufacturing (DM) system 42 obtains or generates a public and private key pair of a public-key cryptosystem. The public key is referred to as the Device Generation Public Key (DGPK) and the private key as DGSK and is used to produce (trusted) SIM-enabled communication devices. To indicate that such manufacturing initialization can be applied uniquely to any number of devices, Fig. 4 identifies the communication device as 14-x, where the "x" denotes any given one of a potentially large number of such devices. The "x" notation is appended to data items, such as "DCERTx" to denote device-unique data items.

The above key generation may be carried out using standard procedures, e.g., Public Key Infrastructure (PKIX X.509), and existing CA services such as VERISIGN, THAWTE, or others. CA services are broadly represented by a certificate authority (CA) system 44 in the illustration and it should be understood that such services make one or more CACERTS available. Thus, the DM system 42 allows the DGPK to be signed by the CA system 44, and correspondingly obtains a Device Generation Certificate (DGCERT). Doing so establishes a trusted certificate chain using PKI principles. In a preferred embodiment, the DM system 42 first generates a Device Generation Root public and private key (respectively denoted as DGRPK and DGRSK) and obtains the Device Generation Root Certificate (DGRCERT) that contains a signature of the DGRPK. The DM system 42 can then create the DGCERT by signing the PGPK with the DGRSK.

Regardless, the DM system 42 may be configured to use standard PKI procedures to create or otherwise obtain a DGCERT that can be verified using CACERT as a trusted root certificate maintained by the CA system 44. In at least one embodiment, verification of DGCERT also depends on DGRCERT, if the DM system 42 uses DGRCERT. This PKI setup offers numerous advantages to device manufacturers. For example, the device manufacturers can create their different DGCERTs that target different device types without having to involve a 3rd party CA. In other words, a CA may be used to sign the DGRCERT, and then the DGRCERT can be used to sign different DGCERTs to be used for generating DGCERTs for different types of communication devices. A device manufacturer thus can conveniently create DCERTs that are tied to model types of the devices against which they are issued, thereby providing additional security and integrity.

Prior to or in conjunction with the production of a SIM-based communication device, e.g., production of the communication device 14-x, the DM system 42 generates a device unique key pair DPKx and DSKx and a device certificate DCERTx, based on signing the DPKx using the DGSK. The DPKx, DSKx, DCERTx, and the required certificates to verify DCERTx are stored in the communication device 14-x together with a device identity, e.g., IMEIx. While use of an IMEI may be preferable in some cases, the device identifier can be any other suitable number. Note that, except for DCERT, the DM system 42 need not store the actual verification certificate information in the communication device 14-x. Rather, URLs can be stored for later use in finding/fetching the appropriate certificates. Further, the CACERT may be known to the entity that wants to verify the certificates (this is, for example, normally done in by web browser software).

In at least one embodiment, which may be preferred in one or more cases, the DM system 42 maintains a database 46 to track information for the communication devices initialized by the DM system 42. This database 46 may be, for example, included in or accessible to the validation system 34 shown in Fig. 1. Advantageously, the database 46 can be used to look up communication devices and possibly mark compromised devices, e.g. by revoking their DCERTs. More broadly, the database 46 can be used with standard PKI certificate revocation/check techniques such as CRL or OCSP for checking whether given communication devices are trusted. The database 46 also may be configured to bind other aspects of given communication devices, such as model type and/or allowed usage times, into the corresponding DCERTs.

Still further, the DM system 42 can be configured to program one or a list of CA certificates that can be used by communication devices to check/verify operator certificates (OCERTs). Regardless, the DM system 42 includes or is associated with a programming station 48 that can be used to transfer (securely) the various certificate and other initialization information. As shown, the DM system 42 may use the programming station 48 to initialize the communication device 14-x by transferring an assigned IMEIx and corresponding DSKx, DPKx, and DCERTx. Further, the programming station 46 may transfer DGCERT, DGRCERT, and CACERT information. Such information can be, for example, used to initialize a software-based SIM implemented in the communication device 14-x, thereby making the device ready for IDD-based subscription credentialing according to, for example, any of the various subscription credentialing embodiments described earlier herein.

However, it should be understood that the foregoing description and the accompanying drawings represent non-limiting examples of the methods, systems, and individual apparatuses taught herein. As such, the present invention is not limited by the foregoing description and accompanying drawings. Instead, the present invention is limited only by the following claims and their legal equivalents.

## Claims

1. A subscription credentialing system for providing subscription credentials to remote communication devices lacking subscription credentials for network access, said subscription credentialing system comprising a subscription server configured to:
receive a credential request from an intermediate data device operating under the control of a requesting user and having a first communication link with the remote communication device and a second communication link with the subscription server;
prompt an external identity verification system to communicate with the intermediate data device to verify a device owner identity to be linked with the subscription credentials;
responsive to device owner identity verification, establish communication with the remote communication device through the intermediate data device and request a device certificate from the remote communication device;
prompt an external validation system to verify a validity of the device certificate;
responsive to validation of the device certificate, send a first transaction identifier and operator certificate to the remote communication device and correspondingly receive a signed return value from the remote communication device;
authenticate and decrypt the signed return value to recover a second transaction identifier and correspondingly generate a credentialing session key from the first and second transaction identifier; and
conduct an encrypted credentialing session with the remote communication device based on the session key, including the transfer of the subscription credentials.

2. The subscription credentialing system of claim 1, wherein the subscription server comprises an internet-based server that is configured for internet-based communications with one or more of the intermediate data device, the external identity verification system, and the external validation system.

3. The subscription credentialing system of claim 1, wherein the subscription server comprises an internet web server that is configured to provide a web browser-based interface to the intermediate data device.

4. The subscription credentialing system of claim 1, wherein the subscription server is configured to generate the first transaction identifier as a first random value.

5. The subscription credentialing system of claim 1, wherein the subscription server is configured to decrypt the signed return value by verifying a signature of the signed return value against the device certificate, decrypting the signed return value using an operator secret key associated with the operator certificate, and verifying that the signed return value includes a correct copy of the first transaction identifier.

6. The subscription credentialing system of claim 5, wherein the subscription server is configured to generate the credentialing session key by hashing a combination of the first and second transaction identifiers.

7. The subscription credentialing system of claim 1, wherein the subscription server is configured to communicate with a subscriber registration server to activate the remote communication device for one or more communication networks associated with the subscription credentials, and to communicate with the external validation system to indicate activation of the remote communication device.

8. The subscription credentialing system of claim 1, wherein the subscription server is further configured to cancel active subscription credentials for a credentialed remote communication device based on:
receiving a deactivation request from the credentialed remote communication device, including a device identifier and a device certificate;
prompting an external validation system to verify a validity of the device certificate;
responsive to validation of the device certificate, sending a first transaction identifier and operator certificate to the credentialed remote communication device and correspondingly receiving a signed return value from the credentialed remote communication device;
authenticating and decrypting the signed return value to recover a subscription credential identifier and a second transaction identifier;
if the subscription credential identifier corresponds to a subscription, generating an encrypted deactivation message based on the subscription credential identifier and the first and second transaction identifiers and sending the deactivation message to the credentialed remote communication device; and
prompting a subscriber registration server to deactivate the active subscription credentials.

9. A method of providing subscription credentials to remote communication devices lacking subscription credentials for network access, said method comprising:
receiving a credential request from an intermediate data device operating under control of a requesting user and having a first communication link with the remote communication device;
prompting an external identity verification system to communicate with the intermediate data device to verify a device owner identity to be linked with the subscription credentials;
responsive to device owner identity verification, establishing communication with the remote communication device through the intermediate data device and requesting a device certificate from the remote communication device;
prompting an external validation system to verify a validity of the device certificate;
responsive to validation of the device certificate, sending a first transaction identifier and operator certificate to the remote communication device and correspondingly receiving a signed return value from the remote communication device;
authenticating and decrypting the signed return value to recover a second transaction identifier and correspondingly generating a credentialing session key from the first and second transaction identifiers; and
conducting an encrypted credentialing session with the remote communication device based on the session key, including transferring the subscription credentials.

10. The method of claim 9, wherein receiving the credential request from the intermediate data device comprises receiving an internet-based request at a subscription server communicatively linked to the intermediate data device via the internet.

11. The method of claim 9, further comprising generating the first transaction identifier as a first random value.

12. The method of claim 9, wherein authenticating and decrypting the signed return value comprises verifying a signature of the signed return value against the device certificate, decrypting the signed return value using an operator secret key associated with the operator certificate, and verifying that the signed return value includes a correct copy of the first transaction identifier.

13. The method of claim 12, wherein generating the credentialing session key from the first and second identifiers comprises hashing a combination of the first and second transaction identifiers.

14. The method of claim 9, further comprising communicating with a subscriber registration server to activate the remote communication device for one or more communication networks associated with the subscription credentials, and communicating with the external validation system to indicate activation of the remote communication device.

15. The method of claim 9, further comprising canceling active subscription credentials for a credentialed remote communication device by receiving a deactivation request from the credentialed remote communication device, including a device identifier and a device certificate; prompting an external validation system to verify a validity of the device certificate; responsive to validation of the device certificate, sending a first transaction identifier and operator certificate to the credentialed remote communication device and correspondingly receiving a signed return value from the credentialed remote communication device; authenticating and decrypting the signed return value to recover a subscription credential identifier and a second transaction identifier; if the subscription credential identifier corresponds to an subscription, generating an encrypted deactivation message based on the subscription credential identifier and the first and second transaction identifiers and sending the deactivation message to the credentialed remote communication device; and prompting a subscriber registration server to deactivate the active subscription credentials.

## Patentansprüche

1. Abonnementberechtigungserteilungssystem zum Bereitstellen von Abonnementberechtigungen für entfernte Kommunikationsgeräte, die keine Abonnementberechtigungen für Netzzugang haben, wobei das Abonnementberechtigungserteilungssystem einen Abonnementserver umfasst, der konfiguriert ist zum:
Empfangen einer Berechtigungsanforderung von einem Zwischendatengerät, das unter der Kontrolle eines anfordernden Benutzers funktioniert und eine erste Kommunikationsverbindung mit dem entfernten Kommunikationsgerät und eine zweite Kommunikationsverbindung mit dem Abonnementserver aufweist;
Auffordern eines externen Identitätsverifizierungssystems, mit dem Zwischendatengerät zu kommunizieren, um eine Gerätebesitzeridentität zu verifizieren, die mit den Abonnementberechtigungen zu verknüpft werden soll;
Herstellen in Reaktion auf die Verifizierung der Gerätebesitzeridentität von Kommunikation mit dem entfernten Kommunikationsgerät durch das Zwischendatengerät und Anfordern eines Gerätezertifikats vom entfernten Kommunikationsgerät;
Auffordern eines externen Validierungssystems, eine Validität des Gerätezertifikats zu verifizieren;
Senden in Reaktion auf die Validierung des Gerätezertifikats einer ersten Transaktionskennung und eines Betreiberzertifikats an das entfernte Kommunikationsgerät und entsprechendes Empfangen eines signierten Rückgabewerts vom entfernten Kommunikationsgerät;
Authentisieren und Entschlüsseln des signierten Rückgabewerts, um eine zweite Transaktionskennung wiederherzustellen, und entsprechendes Erzeugen eines Berechtigungserteilungs-Sitzungsschlüssels aus der ersten und zweiten Transaktionskennung; und
Durchführen einer verschlüsselten Berechtigungserteilungssitzung mit dem entfernten Kommunikationsgerät basierend auf dem Sitzungsschlüssel, welche die Übertragung der Abonnementberechtigungen umfasst.

2. Abonnementberechtigungserteilungssystem nach Anspruch 1, wobei der Abonnementserver einen Internet-basierten Server umfasst, der für Internet-basierte Kommunikationen mit einem oder mehreren Zwischendatengeräten, dem externen Identitätsverifizierungssystem und dem externen Validierungssystem konfiguriert ist.

3. Abonnementberechtigungserteilungssystem nach Anspruch 1, wobei der Abonnementserver einen Internet-Webserver umfasst, der so konfiguriert ist, dass er eine Webbrowser-basierte Schnittstelle für das Zwischendatengerät bereitstellt.

4. Abonnementberechtigungserteilungssystem nach Anspruch 1, wobei der Abonnementserver so konfiguriert ist, dass er die erste Transaktionskennung als einen ersten Zufallswert erzeugt.

5. Abonnementberechtigungserteilungssystem nach Anspruch 1, wobei der Abonnementserver so konfiguriert ist, dass er den signierten Rückgabewert durch Verifizieren einer Signatur des signierten Rückgabewerts anhand des Gerätezertifikats, Entschlüsseln des signierten Rückgabewerts unter Verwendung eines mit dem Betreiberzertifikat assoziierten Betreiber-Geheimschlüssels und Verifizieren entschlüsselt, dass der signierte Rückgabewert eine korrekte Kopie der ersten Transaktionskennung umfasst.

6. Abonnementberechtigungserteilungssystem nach Anspruch 5, wobei der Abonnementserver so konfiguriert ist, dass er den Berechtigungserteilungs-Sitzungsschlüssel durch Hash-Codieren einer Kombination der ersten und zweiten Transaktionskennungen erzeugt.

7. Abonnementberechtigungserteilungssystem nach Anspruch 1, wobei der Abonnementserver so konfiguriert ist, dass er mit einem Teilnehmerregistrierungsserver kommuniziert, um das entfernte Kommunikationsgerät für ein oder mehrere Kommunikationsnetze zu aktivieren, die mit den Abonnementberechtigungen assoziiert sind, und mit dem externen Validierungssystem kommuniziert, um die Aktivierung des entfernten Kommunikationsgeräts anzuzeigen.

8. Abonnementberechtigungserteilungssystem nach Anspruch 1, wobei der Abonnementserver ferner so konfiguriert ist, dass er aktive Abonnementberechtigungen für ein berechtigtes entferntes Kommunikationsgerät auf der Basis von Folgendem aufhebt:
Empfangen einer Deaktivierungsanforderung vom berechtigten entfernten Kommunikationsgerät, die eine Gerätekennung und ein Gerätezertifikat umfasst;
Auffordern eines externen Validierungssystems, eine Validität des Gerätezertifikats zu verifizieren;
Senden in Reaktion auf die Validierung des Gerätezertifikats einer ersten Transaktionskennung und einer Betreiberzertifikats an das berechtigte entfernte Kommunikationsgerät und entsprechendes Empfangen eines signierten Rückgabewerts vom berechtigten entfernten Kommunikationsgerät;
Authentisieren und Entschlüsseln des signierten Rückgabewerts, um eine Abonnementberechtigungskennung und eine zweite Transaktionskennung wiederherzustellen;
Erzeugen, wenn die Abonnementberechtigungskennung einem Abonnement entspricht, einer verschlüsselten Deaktivierungsnachricht basierend auf der Abonnementberechtigungskennung und den ersten und zweiten Transaktionskennungen und Senden der Deaktivierungsnachricht an das berechtigte Kommunikationsgerät; und
Auffordern eines Teilnehmerregistrierungsservers, die aktiven Abonnementberechtigungen zu deaktivieren.

9. Verfahren zur Bereitstellung von Abonnementberechtigungen für entfernte Kommunikationsgeräte, die keine Abonnementberechtigungen für Netzzugang haben, wobei das Verfahren umfasst:
Empfangen einer Berechtigungsanforderung von einem Zwischendatengerät, das unter der Kontrolle eines anfordernden Benutzers funktioniert und eine erste Kommunikationsverbindung mit dem entfernten Kommunikationsgerät aufweist;
Auffordern eines externen Identitätsverifizierungssystems, mit dem Zwischendatengerät zu kommunizieren, um eine Gerätebesitzeridentität zu verifizieren, die mit den Abonnementberechtigungen zu verknüpft werden soll;
Herstellen in Reaktion auf die Verifizierung der Gerätebesitzeridentität von Kommunikation mit dem entfernten Kommunikationsgerät durch das Zwischendatengerät und Anfordern eines Gerätezertifikats vom entfernten Kommunikationsgerät;
Auffordern eines externen Validierungssystems, eine Validität des Gerätezertifikats zu verifizieren;
Senden in Reaktion auf die Validierung des Gerätezertifikats einer ersten Transaktionskennung und eines Betreiberzertifikats an das entfernte Kommunikationsgerät und entsprechendes Empfangen eines signierten Rückgabewerts vom entfernten Kommunikationsgerät;
Authentisieren und Entschlüsseln des signierten Rückgabewerts, um eine zweite Transaktionskennung wiederherzustellen, und entsprechendes Erzeugen eines Berechtigungserteilungs-Sitzungsschlüssels aus der ersten und zweiten Transaktionskennungen; und
Durchführen einer verschlüsselten Berechtigungserteilungssitzung mit dem entfernten Kommunikationsgerät basierend auf dem Sitzungsschlüssel, welche ein Übertragen der Abonnementberechtigungen umfasst.

10. Verfahren nach Anspruch 9, wobei das Empfangen der Berechtigungsanforderung vom Zwischendatengerät ein Empfangen einer Internet-basierten Anforderung an einem Abonnementserver umfasst, der über das Internet kommunikativ mit dem Zwischendatengerät verbunden ist.

11. Verfahren nach Anspruch 9, ferner umfassend ein Erzeugen der ersten Transaktionskennung als einen ersten Zufallswert.

12. Verfahren nach Anspruch 9, wobei das Authentisieren und Entschlüsseln des signierten Rückgabewerts ein Verifizieren einer Signatur des signierten Rückgabewerts anhand des Gerätezertifikats, Entschlüsseln des signierten Rückgabewerts unter Verwendung eines mit dem Betreiberzertifikat assoziierten Betreiber-Geheimschlüssels und Verifizieren umfasst, dass der signierte Rückgabewert eine korrekte Kopie der ersten Transaktionskennung umfasst.

13. Verfahren nach Anspruch 12, wobei das Erzeugen des Berechtigungserteilungs-Sitzungsschlüssels aus den ersten und zweiten Kennungen ein Hash-Codieren einer Kombination der ersten und zweiten Transaktionskennungen umfasst.

14. Verfahren nach Anspruch 9, ferner umfassend ein Kommunizieren mit einem Teilnehmerregistrierungsserver, um das entfernte Kommunikationsgerät für ein oder mehrere Kommunikationsnetze zu aktivieren, die mit den Abonnementberechtigungen assoziiert sind, und Kommunizieren mit dem externen Validierungssystem, um die Aktivierung des entfernten Kommunikationsgeräts anzuzeigen.

15. Verfahren nach Anspruch 9, ferner umfassend ein Aufheben von aktiven Abonnementberechtigungen für ein berechtigtes entferntes Kommunikationsgerät durch Empfangen einer Deaktivierungsanforderung vom berechtigten entfernten Kommunikationsgerät, die eine Gerätekennung und ein Gerätezertifikat umfasst; Auffordern eines externen Validierungssystems, eine Validität des Gerätezertifikats zu verifizieren; Senden in Reaktion auf die Validierung des Gerätezertifikats einer ersten Transaktionskennung und eines Betreiberzertifikats an das berechtigte entfernte Kommunikationsgerät und entsprechendes Empfangen eines signierten Rückgabewerts vom berechtigten entfernten Kommunikationsgerät; Authentisieren und Entschlüsseln des signierten Rückgabewerts, um eine Abonnementberechtigungskennung und eine zweite Transaktionskennung wiederherzustellen; Erzeugen, wenn die Abonnementberechtigungskennung einem Abonnement entspricht, einer verschlüsselten Deaktivierungsnachricht basierend auf der Abonnementberechtigungskennung und den ersten und zweiten Transaktionskennungen und Senden der Deaktivierungsnachricht an das berechtigte Kommunikationsgerät; und Auffordern eines Teilnehmerregistrierungsservers, die aktiven Abonnementberechtigungen zu deaktivieren.

## Revendications

1. Système de fourniture de justificatifs d'identité d'abonnement pour fournir des justificatifs d'identité d'abonnement à des dispositifs de communication distants ne disposant pas de justificatifs d'identité d'abonnement pour un accès de réseau, ledit système de fourniture de justificatifs d'identité d'abonnement comprenant un serveur d'abonnement configuré pour effectuer :
la réception d'une demande de justificatifs d'identité en provenance d'un dispositif de données intermédiaire fonctionnant sous le contrôle d'un utilisateur demandeur et comportant une première liaison de communication avec le dispositif de communication distant et une deuxième liaison de communication avec le serveur d'abonnement ;
la demande à un système de vérification d'identité externe de communiquer avec le dispositif de données intermédiaire pour vérifier une identité de propriétaire de dispositif à relier aux justificatifs d'identité d'abonnement ;
en réponse à la vérification d'identité de propriétaire de dispositif, l'établissement d'une communication avec le dispositif de communication distant par l'intermédiaire du dispositif de données intermédiaire et la demande d'un certificat de dispositif au dispositif de communication distant ;
la demande à un système de validation externe de vérifier une validité du certificat de dispositif ;
en réponse à une validation du certificat de dispositif, l'envoi d'un premier identifiant de transaction et d'un certificat d'opérateur au dispositif de communication distant et la réception, de manière correspondante, d'une valeur de retour signée en provenance du dispositif de communication distant ;
l'authentification et le décryptage de la valeur de retour signée pour récupérer un deuxième identifiant de transaction et générer, de manière correspondante, une clé de session de fourniture de justificatifs d'identité à partir du premier identifiant de transaction et du deuxième identifiant de transaction ; et
l'exécution d'une session de fourniture de justificatifs d'identité cryptée avec le dispositif de communication distant sur la base de la clé de session, comprenant le transfert des justificatifs d'identité d'abonnement.

2. Système de fourniture de justificatifs d'identité d'abonnement selon la revendication 1, dans lequel le serveur d'abonnement comprend un serveur basé sur Internet qui est configuré pour des communications basées sur Internet avec un ou plusieurs du dispositif de données intermédiaire, du système de vérification d'identité externe et du système de validation externe.

3. Système de fourniture de justificatifs d'identité d'abonnement selon la revendication 1, dans lequel le serveur d'abonnement comprend un serveur Web Internet qui est configuré pour fournir une interface basée sur navigateur Web au dispositif de données intermédiaire.

4. Système de fourniture de justificatifs d'identité d'abonnement selon la revendication 1, dans lequel le serveur d'abonnement est configuré pour générer le premier identifiant de transaction en tant que première valeur aléatoire.

5. Système de fourniture de justificatifs d'identité d'abonnement selon la revendication 1, dans lequel le serveur d'abonnement est configuré pour décrypter la valeur de retour signée par la vérification d'une signature de la valeur de retour signée par rapport au certificat de dispositif, le décryptage de la valeur de retour signée en utilisant une clé secrète d'opérateur associée au certificat d'opérateur, et la vérification que la valeur de retour signée comprend une copie correcte du premier identifiant de transaction.

6. Système de fourniture de justificatifs d'identité d'abonnement selon la revendication 5, dans lequel le serveur d'abonnement est configuré pour générer la clé de session de fourniture de justificatifs d'identité par le hachage d'une combinaison du premier identifiant de transaction et du deuxième identifiant de transaction.

7. Système de fourniture de justificatifs d'identité d'abonnement selon la revendication 1, dans lequel le serveur d'abonnement est configuré pour communiquer avec un serveur d'enregistrement d'abonnement pour activer le dispositif de communication distant pour un ou plusieurs réseaux de communication associés aux justificatifs d'identité d'abonnement, et communiquer avec le système de validation externe pour indiquer une activation du dispositif de communication distant.

8. Système de fourniture de justificatifs d'identité d'abonnement selon la revendication 1, dans lequel le serveur d'abonnement est en outre configuré pour annuler des justificatifs d'identité d'abonnement actifs pour un dispositif de communication distant ayant fourni des justificatifs d'identité sur la base de :
la réception d'une demande de désactivation en provenance du dispositif de communication distant ayant fourni des justificatifs d'identité, comprenant un identifiant de dispositif et un certificat de dispositif ;
la demande à un système de validation externe de vérifier une validité du certificat de dispositif ;
en réponse à une validation du certificat de dispositif, l'envoi d'un premier identifiant de transaction et d'un certificat d'opérateur au dispositif de communication distant ayant fourni des justificatifs d'identité et la réception, de manière correspondante, d'une valeur de retour signée en provenance du dispositif de communication distant ayant fourni des justificatifs d'identité ;
l'authentification et le décryptage de la valeur de retour signée pour récupérer un identifiant de justificatifs d'identité d'abonnement et un deuxième identifiant de transaction ;
si l'identifiant de justificatifs d'identité d'abonnement correspond à un abonnement, la génération d'un message de désactivation crypté sur la base de l'identifiant de justificatifs d'identité d'abonnement et des premier et deuxième identifiants de transaction et l'envoi du message de désactivation au dispositif de communication distant ayant fourni des justificatifs d'identité ; et
la demande à un serveur d'enregistrement d'abonné de désactiver les justificatifs d'identité d'abonnement actifs.

9. Procédé de fourniture de justificatifs d'identité d'abonnement à des dispositifs de communication distants ne disposant pas de justificatifs d'identité d'abonnement pour un accès de réseau, ledit procédé comprenant :
la réception d'une demande de justificatifs d'identité en provenance d'un dispositif de données intermédiaire fonctionnant sous le contrôle d'un utilisateur demandeur et comportant une première liaison de communication avec le dispositif de communication distant ;
la demande à un système de vérification d'identité externe de communiquer avec le dispositif de données intermédiaire pour vérifier une identité de propriétaire de dispositif à relier aux justificatifs d'identité d'abonnement ;
en réponse à la vérification d'identité de propriétaire de dispositif, l'établissement d'une communication avec le dispositif de communication distant par l'intermédiaire du dispositif de données intermédiaire et la demande d'un certificat de dispositif au dispositif de communication distant ;
la demande à un système de validation externe de vérifier une validité du certificat de dispositif ;
en réponse à une validation du certificat de dispositif, l'envoi d'un premier identifiant de transaction et d'un certificat d'opérateur au dispositif de communication distant et la réception, de manière correspondante, d'une valeur de retour signée en provenance du dispositif de communication distant ;
l'authentification et le décryptage de la valeur de retour signée pour récupérer un deuxième identifiant de transaction et générer, de manière correspondante, une clé de session de fourniture de justificatifs d'identité à partir du premier identifiant de transaction et du deuxième identifiant de transaction ; et
l'exécution d'une session de fourniture de justificatifs d'identité cryptée avec le dispositif de communication distant sur la base de la clé de session, comprenant le transfert des justificatifs d'identité d'abonnement.

10. Procédé selon la revendication 9, dans la réception de la demande de justificatifs d'identité en provenance du dispositif de données intermédiaire comprend la réception d'une demande basée sur Internet à un serveur d'abonnement relié, de manière à pouvoir communiquer, avec le dispositif de données intermédiaire par l'intermédiaire de l'Internet.

11. Procédé selon la revendication 9, comprenant en outre la génération du premier identifiant de transaction en tant que première valeur aléatoire.

12. Procédé selon la revendication 9, dans lequel l'authentification et le décryptage de la valeur de retour signée comprend la vérification d'une signature de la valeur de retour signée par rapport au certificat de dispositif, le décryptage de la valeur de retour signée en utilisant une clé secrète d'opérateur associée au certificat d'opérateur, et la vérification que la valeur de retour signée comprend une copie correcte du premier identifiant de transaction.

13. Procédé selon la revendication 12, dans lequel la génération de la clé de session de fourniture de justificatifs d'identité à partir des premier et deuxième identifiants comprend le hachage d'une combinaison du premier identifiant de transaction et du deuxième identifiant de transaction.

14. Procédé selon la revendication 9, comprenant en outre la communication avec un serveur d'enregistrement d'abonné pour activer le dispositif de communication distant pour un ou plusieurs réseaux de communication associés aux justificatifs d'identité d'abonnement, et la communication avec le système de validation externe pour indiquer une activation du dispositif de communication distant.

15. Procédé selon la revendication 9, comprenant en outre l'annulation de justificatifs d'identité d'abonnement actifs pour un dispositif de communication distant ayant fourni des justificatifs d'identité par la réception d'une demande de désactivation en provenance du dispositif de communication distant ayant fourni des justificatifs d'identité, comprenant un identifiant de dispositif et un certificat de dispositif ; la demande à un système de validation externe de vérifier une validité du certificat de dispositif ; en réponse à une validation du certificat de dispositif, l'envoi d'un premier identifiant de transaction et d'un certificat d'opérateur au dispositif de communication distant ayant fourni des justificatifs d'identité et la réception, de manière correspondante, d'une valeur de retour signée en provenance du dispositif de communication distant ayant fourni des justificatifs d'identité ; l'authentification et le décryptage de la valeur de retour signée pour récupérer un identifiant de justificatifs d'identité d'abonnement et un deuxième identifiant de transaction ; si l'identifiant de justificatifs d'identité d'abonnement correspond à un abonnement, la génération d'un message de désactivation crypté sur la base de l'identifiant de justificatifs d'identité d'abonnement et des premier et deuxième identifiants de transaction et l'envoi du message de désactivation au dispositif de communication distant ayant fourni des justificatifs d'identité ; et la demande à un serveur d'enregistrement d'abonné de désactiver les justificatifs d'identité d'abonnement actifs.
